# EUROPEAN PATENT APPLICATION

(11) **EP 3 925 821 A1**
(43) Date of publication of application: **22.12.2021**
(21) Application number: 19914755.4
(22) Date of filing: 31.12.2019
(51) Int. Cl.: B60N 2/07, B60N 2/02, B60N 2/08

(54) **ELECTRIC GROUND SLIDING RAIL TRANSMISSION SYSTEM**

(30) Priority: 14.02.2019 CN 201910115062
(71) Applicant: Yanfeng Adient Seating Co., Ltd., Kangqiao Industrial Zone Pudong New Area Shanghai 201315 (CN)
(72) Inventor: ZHANG, Jianglin, Shanghai 201315 (CN); TAO, Huijia, Shanghai 201315 (CN); JIANG, Honghui, Shanghai 201315 (CN); HE, Longhui, Shanghai 201315 (CN); FAN, Yedi, Shanghai 201315 (CN)
(74) Representative: Schweiger, Martin
(86) International application number: PCT/CN2019/130595
(87) International publication number: WO 2020/164328

(57) **Abstract**

An electric ground slide rail transmission system disclosed in the present invention includes a left rail assembly, a right rail assembly, a driving rail assembly, and a slide rail connection frame. The driving rail assembly includes a lower rail assembly, a transmission box support slidably disposed on the lower rail assembly, a transmission assembly mounted in the transmission box support, an output gear configured to be driven by the transmission assembly, and a driving motor mounted to the transmission box support. The driving motor is configured to drive the transmission assembly to operate, the transmission assembly is configured to drive the output gear to rotate, the output gear is meshed with a rack disposed in the lower rail assembly to drive the transmission box support, and the transmission box support drives, by using the slide rail connection frame assembly, the seat to be adjusted frontward and rearward along the left rail assembly and the right rail assembly. The present invention provides a transmission system integrated with gears and racks, so as to implement a stable, beautiful, and low-cost electric ground slide rail transmission system.

## Description

### TECHNICAL FIELD

The present invention relates to the technical field of automobile parts, and in particular, to an electric ground slide rail transmission system.

### BACKGROUND

With development of automobile technologies, increasing requirements of customers for automobile comfort, rapid growth in sales of large-space vehicles having a plurality of rows of seats such as MPVs in recent years, and future development of unmanned vehicles, a market demand for automobile seats allowing a large-stroke adjustment and rail sharing among a plurality of rows of seats becomes a trend. Therefore, developing large-stroke ground slide rail technologies is also in line with the market demand, especially a demand for a large-stroke ground slide rail that may be electrically adjusted. However, different from a traditional short slide rail technology, in an electric ground slide rail technology, a ground slide rail has a unique structure due to its unique application field and excessive adjustment stroke, and new performance requirements are also imposed on the ground slide rail, especially on an electric ground slide rail transmission system.

The applicant has conducted long-term research in the field of electric ground slide rails and has applied for a plurality of patents. For example, Chinese Patent Application No. 201810998011.1 discloses an electric ground slide rail system for an automobile seat, Chinese Patent Application No. 201810984862.0 discloses a split transmission system for an electric long slide rail, and Chinese Patent Application No. 201810984861.6 discloses an electric long slide transmission system. For example,
the patent applications have respective advantages and disadvantages.

The electric ground slide rail system for an automobile seat disclosed in Chinese Patent Application No. 201810998011.1 is a low-cost three-rail electric ground slide rail having no memory position requirements. This application uses a single-wheel external drive, and therefore a structure and a process are easily realized. However, this application realizes seat adjustment by rolling wheels on a surface of a middle rail, which has disadvantages such as transmission slipping, inaccurate transmission, and an undesirable appearance of a slide rail.

The split transmission system for an electric long slide rail disclosed in Chinese Patent Application No. 201810984862.0 and the electric long slide rail transmission system disclosed in Chinese Patent Application No. 201810984861.6 are both electric ground slide rails having memory and appearance requirements. These applications have built-in gears and racks, and therefore have technical advantages such as high transmission accuracy and convenient high-precision memory control. However, slide rails on both sides require a gear box and a rack.

### SUMMARY

A technical problem to be resolved in the present invention is to provide a combination of advantages of the prior art in view of disadvantages of the prior art. The present invention integrates a gear and rack transmission system, realizing a stable, beautiful, and low-cost electric ground slide rail transmission system.

The technical problem to be solved by the present invention may be implemented by the following technical solutions.

An electric ground slide rail transmission system includes a left rail assembly, a right rail assembly, a driving rail assembly, and a slide rail connection frame/assembly, the left rail assembly and the right rail assembly being configured to provide a support function and a locking function of a slide rail, the driving rail assembly being placed between the left rail assembly and the right rail assembly to provide an electric transmission function of the slide rail, the slide rail connection frame assembly being configured to connect the left rail assembly, the right rail assembly, and the driving rail assembly into a whole and being connected to a seat, to form an electric ground slide rail transmission system. The driving rail assembly includes a lower rail assembly, a transmission box support slidably disposed on the lower rail assembly, a transmission assembly mounted in the transmission box support, an output gear configured to be driven by the transmission assembly, and a driving motor mounted to the transmission box support. The driving motor is configured to drive the transmission assembly to operate, the transmission assembly is configured to drive the output gear to rotate, the output gear is meshed with a rack disposed in the lower rail assembly to drive the transmission box support to linearly reciprocate on the lower rail assembly, and the transmission box support that linearly moves drives, by using the slide rail connection frame assembly, the seat to be adjusted frontward and rearward along the left rail assembly and the right rail assembly.

The technical problem to be solved by the present invention may also be implemented by the following technical solutions.

An electric ground slide rail transmission system includes a left rail assembly and a right rail assembly, the left rail assembly and the right rail assembly being configured to provide a support function and a locking function of a slide rail, and a left slide rail support on the left rail assembly and a right slide rail support on the right rail assembly being directly connected to a seat. The system further includes two transmission assemblies and two output gears respectively disposed on the left slide rail support and the right slide rail support and a driving motor. The driving motor is configured to synchronously drive the two transmission assemblies to operate, the two transmission assemblies are configured to synchronously drive the two output gears to rotate, the two output gears are respectively meshed with racks respectively disposed in the left rail assembly and the right rail assembly to drive the left slide rail support and the right slide rail support to linearly reciprocate on the left rail assembly and the right rail assembly respectively. The left slide rail support and the right slide rail support that linearly move drive the seat to be adjusted frontward and rearward along the left rail assembly and the right rail assembly.

In a preferred embodiment of the present invention, the driving motor is mounted to the left slide rail support or the right slide rail support.

In a preferred embodiment of the present invention, the transmission assembly is a transmission gear assembly including a transmission gear box and a driving gear axially disposed in the transmission gear box, the output gears are also axially disposed on the transmission gear box, the driving motor drives the driving gear to rotate, the driving gear drives the output gear to rotate, and the transmission gear box is mounted to the transmission box support or the left slide rail support and the right slide rail support.

In a preferred embodiment of the present invention, an output shaft of the driving motor is inserted into a transmission coupling shaft hole in the driving gear to be coupled with the driving gear.

In a preferred embodiment of the present invention, an outer circumference of the output shaft of the driving motor and an inner circumference of the transmission coupling shaft hole in the driving gear are in asymmetrical hexapetalous shapes matching each other, which can improve positioning accuracy and facilitate meshing of the driving gear, thereby avoiding slipping as a result of long-term operation.

In a preferred embodiment of the present invention, an output shaft of the driving motor is a synchronization rod extending from two ends of the driving motor, inserted into transmission coupling shaft holes of the driving gears in the transmission gear assemblies, and coupled with the driving gears in the transmission gear assemblies. Two ends of the synchronization rod are axially disposed on the left slide rail support and the right slide rail support respectively.

In a preferred embodiment of the present invention, an outer circumference of the synchronization rod and an inner circumference of the transmission coupling shaft hole in the driving gear are in asymmetrical hexapetalous shapes matching each other, which can improve positioning accuracy and facilitate meshing of the driving gear, thereby avoiding slipping as a result of long-term operation.

In a preferred embodiment of the present invention, the transmission gear assembly further includes a transmission gear axially disposed in the transmission gear box. The transmission gear is meshed with the driving gear and the output gear, and the driving gear drives, by using the transmission gear, the output gear to rotate.

In a preferred embodiment of the present invention, the transmission gear assembly further includes a first-stage transmission gear and a second-stage transmission gear. The first-stage transmission gear is axially disposed in the transmission gear box, the second-stage transmission gear is coaxially and fixedly connected to the output gear, the first-stage transmission gear is meshed with the driving gear and the second-stage transmission gear, and the driving gear drives, by using the first-stage transmission gear and the second-stage transmission gear, the output gear to rotate.

In a preferred embodiment of the present invention, the second-stage transmission gear is coaxially and fixedly connected to the output gear by using a stud extending through the second-stage transmission gear and the output gear.

In a preferred embodiment of the present invention, the second-stage transmission gear and the output gear are coaxially integrally formed.

In a preferred embodiment of the present invention, the transmission assembly is a transmission synchronization mechanism assembly including a transmission synchronization wheel box, a driving synchronization pulley axially disposed in the transmission synchronization wheel box, an output synchronization pulley coaxially and fixedly connected to the output gears, and a synchronization belt surrounding the driving synchronization pulley and the output synchronization pulley. The output gear is also axially disposed on the transmission synchronization wheel box. The driving motor drives the driving synchronization pulley to rotate. The driving synchronization pulley drives, by using the synchronization belt. The output synchronization pulley to rotate. The output synchronization pulley drives the output gear to rotate. The transmission synchronization wheel box is mounted to the transmission box support or the left slide rail support and the right slide rail support.

In a preferred embodiment of the present invention, an output shaft of the driving motor is inserted into a transmission coupling shaft hole in the driving synchronization pulley to be coupled with the driving synchronization pulley.

In a preferred embodiment of the present invention, an outer circumference of the output shaft of the driving motor and an inner circumference of the transmission coupling shaft hole in the driving synchronization pulley are in asymmetrical hexapetalous shapes matching each other, which can improve positioning accuracy and facilitate matching of the driving gear, thereby avoiding slipping as a result of long-term operation.

In a preferred embodiment of the present invention, an output shaft of the driving motor is a synchronization rod extending from two ends of the driving motor, inserted into a transmission coupling shaft hole of the driving synchronization pulley in a transmission synchronization wheel assembly, and coupled with the driving gears in the two transmission gear assemblies.

In a preferred embodiment of the present invention, an outer circumference of the synchronization rod and an inner circumference of the transmission coupling shaft hole in the driving synchronization pulley are in asymmetrical hexapetalous shapes matching each other, which can improve positioning accuracy and facilitate matching of the driving gear, thereby avoiding slipping as a result of long-term operation.

In a preferred embodiment of the present invention, the transmission synchronization mechanism assembly further includes at least one synchronization belt tensioner axially disposed on the transmission synchronization wheel box to tension the synchronization belt.

In a preferred embodiment of the present invention, a waist-shaped hole is formed at a proper position on the transmission synchronization wheel box, and the synchronization belt tensioner is axially disposed in the waist-shaped hole and is movable and lockable in the waist-shaped hole.

In a preferred embodiment of the present invention, a left locking mechanism in the left rail assembly and a right locking mechanism in the right rail assembly are unlocked by using a synchronization unlocking mechanism, the synchronization unlocking mechanism includes a synchronization unlocking motor and a synchronization unlocking rod configured to be driven by the synchronization unlocking motor, a left end and a right end of the synchronization unlocking rod are drivably connected to the left locking mechanism and the right locking mechanism respectively, and the synchronization unlocking motor is mounted to the transmission box support or the left slide rail support or the right slide rail support.

By means of the foregoing technical solutions which combining the advantages of the prior art, a transmission system integrated with a gear and a rack is provided, implementing a stable, beautiful, and low-cost electric ground slide rail transmission system.

### BRIEF DESCRIPTION OF THE DRAWINGS

FIG. 1 is a schematic assembled diagram of an electric ground slide rail transmission system according to Embodiment 1 of the present invention.
FIG. 2 is a schematic exploded view of the electric ground slide rail transmission system according to Embodiment 1 of the present invention.
FIG. 3 is a schematic assembled diagram of a driving rail assembly of the electric ground slide rail transmission system according to Embodiment 1 of the present invention.
FIG. 4 is a schematic exploded view of the driving rail assembly of the electric ground slide rail transmission system according to Embodiment 1 of the present invention.
FIG. 5 is a schematic assembled diagram of a rack in a lower rail assembly of the electric ground slide rail transmission system according to Embodiment 1 of the present invention.
FIG. 6 is a schematic exploded view of a transmission assembly of the electric ground slide rail transmission system according to Embodiment 1 of the present invention.
FIG. 7 is a schematic exploded view of a transmission gear assembly of the electric ground slide rail transmission system according to Embodiment 1 of the present invention.
FIG. 8 is a schematic assembled diagram of an output shaft of a driving motor and a driving gear of the electric ground slide rail transmission system according to Embodiment 1 of the present invention.
FIG. 9 is a schematic exploded view of a transmission gear assembly of an electric ground slide rail transmission system according to Embodiment 2 of the present invention.
FIG. 10 is a schematic exploded view of a transmission synchronization wheel assembly of an electric ground slide rail transmission system according to Embodiment 3 of the present invention.
FIG. 11 is a schematic assembled diagram of an output shaft of a driving motor and a driving synchronization pulley of the electric ground slide rail transmission system according to Embodiment 3 of the present invention.
FIG. 12 is a schematic assembled diagram of an electric ground slide rail transmission system according to Embodiment 4 of the present invention.
FIG. 13 is a schematic assembled diagram of a synchronization rod and a driving gear of the electric ground slide rail transmission system according to Embodiment 4 of the present invention.
FIG. 14 is a schematic assembled diagram of an electric ground slide rail transmission system according to Embodiment 5 of the present invention.
FIG. 15 is a schematic assembled diagram of a synchronization rod and a driving synchronization pulley of the electric ground slide rail transmission system according to Embodiment 5 of the present invention.
FIG. 16 is a schematic assembled diagram of an electric ground slide rail transmission system according to Embodiment 6 of the present invention.
FIG. 17 is a schematic assembled diagram of a rack of the electric ground slide rail transmission system according to Embodiment 6 of the present invention.
FIG. 18 is a schematic assembled diagram of an electric ground slide rail transmission system according to Embodiment 7 of the present invention.
FIG. 19 is a schematic assembled diagram of a rack of the electric ground slide rail transmission system according to Embodiment 7 of the present invention.

### DETAILED DESCRIPTION

The following further describes the present invention with reference to the accompanying drawings and specific implementations.

### Embodiment 1

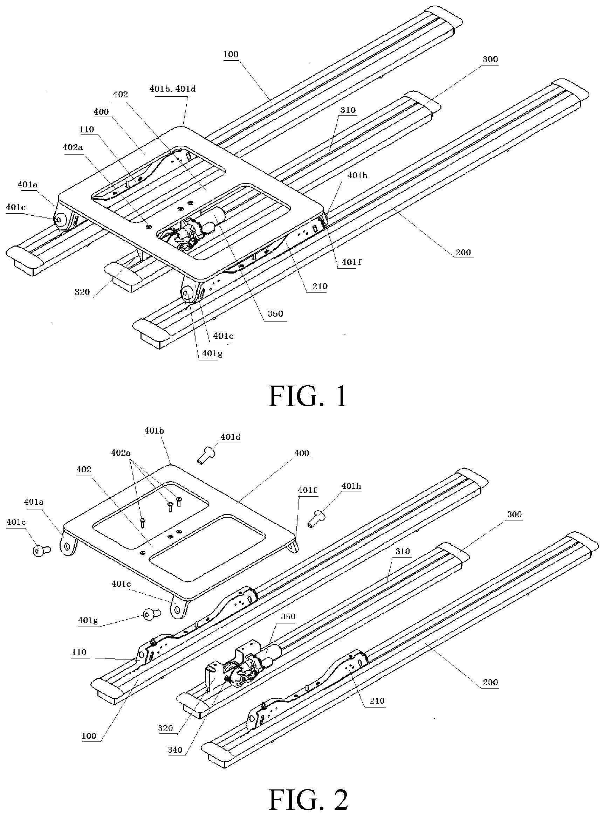

FIG. 1 and FIG. 2 show an electric ground slide rail transmission system, including a left rail assembly 100, a right rail assembly 200, a driving rail assembly 300, and a slide rail connection frame assembly 400. The left rail assembly 100 and the right rail assembly 200 are configured to provide a support function and a locking function of a slide rail. The driving rail assembly 300 is placed between the left rail assembly 100 and the right rail assembly 200 to provide electric transmission for the slide rail. The slide rail connection frame assembly 400 connects the left rail assembly 100, the right rail assembly 200, and the driving rail assembly 300 into a whole and is connected to a seat (not shown), to form an electric ground slide rail transmission system.

Two support legs 401a and 401b on a left side of the slide rail connection frame assembly 400 are fixed to a left slide rail support 110 on the left rail assembly 100 by using screws 401c and 401d respectively, and two support legs 401e and 401f on a right side of the slide rail connection frame assembly 400 are fixed to a right slide rail support 210 on the right rail assembly 200 by using screws 401g and 401h respectively.

A middle beam 402 of the slide rail connection frame assembly 400 is fixed to a transmission box support 320 by using a screw 402a.

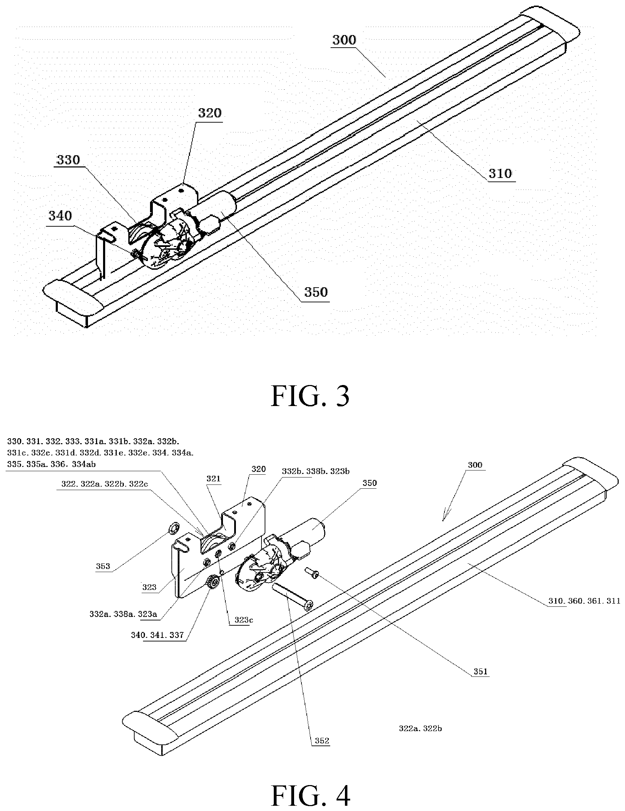

The electric ground slide rail transmission system of Embodiment 1 has the following characteristics. Referring to FIG. 3 to FIG. 8, the driving rail assembly 300 includes a lower rail assembly 310, a transmission box support 320 slidably disposed on the lower rail assembly 310, a transmission assembly, an output gear 340, and a driving motor 350.

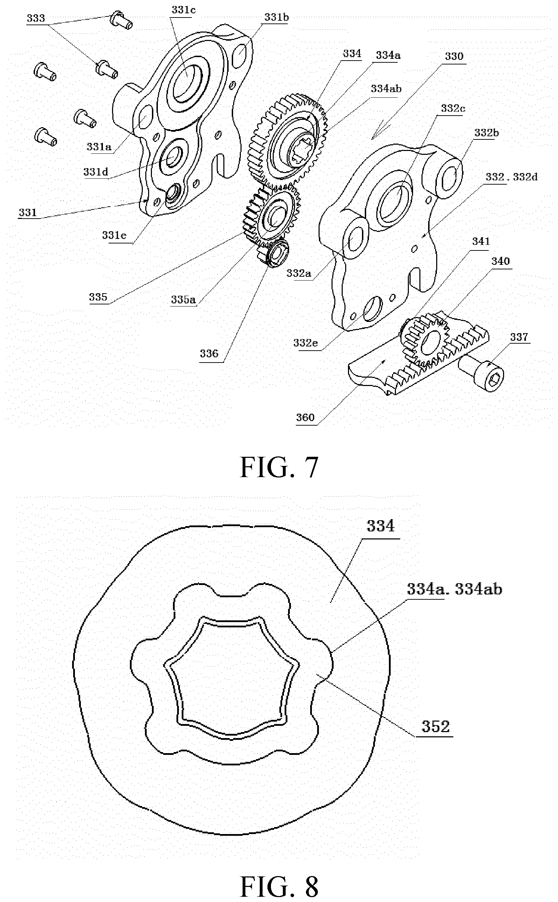

The transmission assembly is a transmission gear assembly 330. A transmission gear box in the transmission gear assembly 330 is a two-piece structure, that is, is composed of a first transmission gear box 331 and a second transmission gear box 332. The first transmission gear box 331 and the second transmission gear box 332 are connected by using a plurality of screws 333. Two mounting holes 331a and 331b and two mounting holes 332a and 332b are respectively provided on the first transmission gear box 331 and the second transmission gear box 332, and driving gear shaft holes 331c and 332c, transmission gear shaft holes 331d and 332d, and output gear shaft holes 331e and 332e are respectively provided on the first transmission gear box 331 and the second transmission gear box 332. The driving gear shaft holes 331c and 332c and the output gear shaft holes 331e and 332e respectively extend through the first transmission gear box 331 and the second transmission gear box 332, and the transmission gear shaft hole 331d also extends through the first transmission gear box 331. The transmission gear shaft hole 332d does not extend through the second transmission gear box 332 and is provided on an inner side of the second transmission gear box 332 (Refer to FIG. 7).

Two ends of a transmission coupling shaft 334a on a driving gear 334 in the transmission gear assembly 330 are axially disposed in the driving gear shaft holes 331c and 332c respectively and placed between the first transmission gear box 331 and the second transmission gear box 332. Two ends of a transmission gear shaft 335a on a transmission gear 335 in the transmission gear assembly 330 are axially disposed in the transmission gear shaft holes 331d and 332d respectively and placed between the first transmission gear box 331 and the second transmission gear box 332.

An output gear shaft 341 on the output gear 340 is axially disposed in the output gear shaft hole 331e and placed outside the first transmission gear box 331. A transmission gear 336 in the transmission gear assembly 330 is coaxially connected to the output gear 340 by using a stud 337 and placed between the first transmission gear box 331 and the second transmission gear box 332. An other end of the stud 337 is fixed in the output gear shaft hole 332e. The transmission gear 336 and the output gear 340 both can rotate about the stud 337 synchronously.

Amounting cavity 321 for mounting the transmission gear assembly 330 is provided on the transmission box support 320. Two transmission gear box mounting holes 322a and 322b are provided on a cavity wall 322 on a side of the mounting cavity 321. Two nuts 323a and 323b are anchored on a cavity wall 323 on another side of the mounting cavity 321. The transmission gear box mounting hole 322a is coaxial with the nut 323a, and the transmission gear box mounting hole 322b is coaxial with the nut 323b.

In addition, driving motor output shaft passing holes 322c and 323c are respectively provided on the cavity walls 322 and 323 on two sides of the mounting cavity 321. The driving motor output shaft passing holes 322c and 323c are coaxial.

The transmission gear assembly 330 is mounted as follows. The transmission gear assembly 330 is placed in the mounting cavity 321 of the transmission box support 320, the mounting hole 331a of the first transmission gear box 331 and the mounting hole 332a of the second transmission gear box 332 are respectively aligned to the mounting holes 322a and 322b of the transmission gear box, the mounting hole 331b of the first transmission gear box 331 and the mounting hole 332b of the second transmission gear box 332 are respectively aligned to the mounting holes 322a and 322b of the transmission gear box, and the driving gear shaft hole 331c of the first transmission gear box 331 and the driving gear shaft hole 332c of the second transmission gear box 332 are respectively aligned to the driving motor output shaft passing holes 322c and 323c. Next, two bolts 338a and 338b are respectively threaded through the transmission gear box mounting holes 322a and 322b, the mounting holes 331a and 331b of the first transmission gear box 331, and the mounting holes 332a and 332b of the second transmission gear box 332 in sequence into the nuts 323a and 323b, and the two bolts 338a and 338b are fastened to mount the transmission gear assembly 330.

The driving motor 350 is mounted to an outer side face of the cavity wall 323 by using a screw 351, and an output shaft 352 of the driving motor 350 passes through the driving motor output shaft passing hole 323c, an inner hole 334ab of the transmission coupling shaft 334a on the driving gear 334, and the driving motor output shaft passing hole 322c in sequence, and is then locked by a circlip 353 for axial limitation.

With reference to FIG. 8, the output shaft 352 of the driving motor 350 is inserted into the inner hole 334ab of the transmission coupling shaft 334a on the driving gear 334 to be coupled with the driving gear 334. An outer circumference of the output shaft 352 of the driving motor 350 and an inner circumference of the inner hole 334ab of the transmission coupling shaft 334a in the driving gear 334 are in asymmetrical hexapetalous shapes matching each other, which can improve positioning accuracy and facilitate meshing of the driving gear, thereby avoiding slipping as a result of long-term operation.

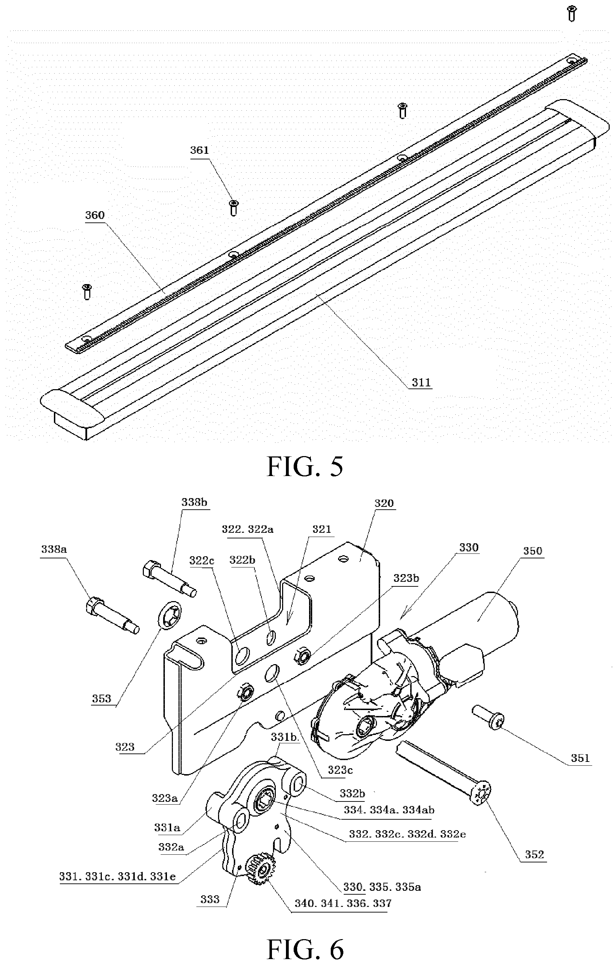

Referring to FIG. 5, a rack 360 is fixed in a driving rail 311 of the lower rail assembly 310 by using a plurality of screws 361.

An operating process of this embodiment is as follows:
The output shaft 352 of the driving motor 350 drives the driving gear 334 to rotate, the rotating driving gear 334 drives the transmission gear 335 to rotate, the rotating transmission gear 335 drives the transmission gear 336 to rotate, the rotating transmission gear 336 drives the output gear 340 to rotate, and the rotating output gear 340 is meshed with the rack 360 to drive the transmission box support 320 to linearly reciprocate on the driving rail 311 of the lower rail assembly 310. The transmission box support 320 that linearly moves drives, by using the slide rail connection frame assembly 400, the seat to be adjusted frontward and rearward along the left rail assembly 100 and the right rail assembly 200.

### Embodiment 2

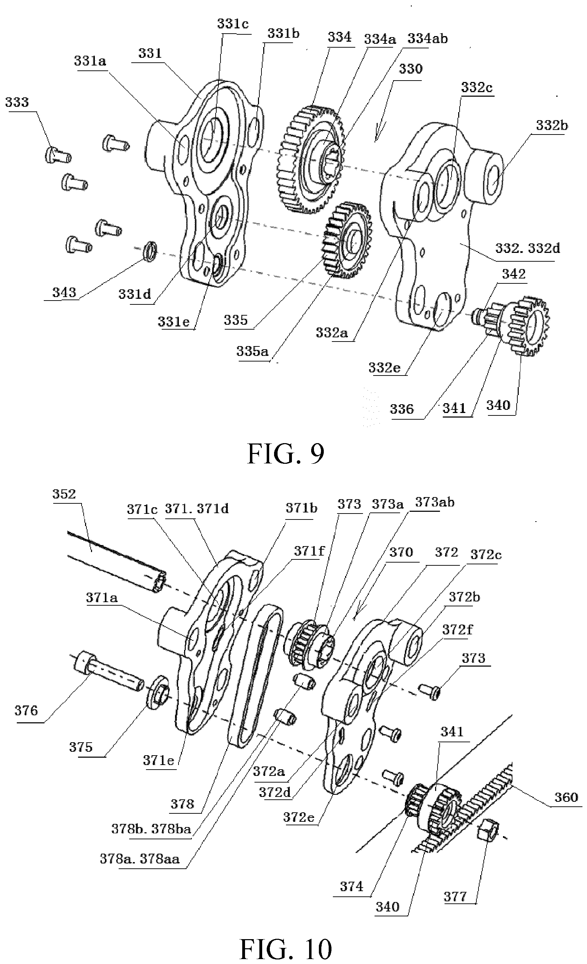

A difference between an electric ground slide rail transmission system in this embodiment and the electric ground slide rail transmission system in Embodiment 1 is as follows. Referring to FIG. 9, the transmission gear 336 and the output gear 340 are coaxially integrated, a shaft 341 between the transmission gear 336 and the output gear 340 is disposed in the output gear shaft hole 331e, and a shaft 342 inside the transmission gear 336 is disposed in the output gear shaft hole 332e, extends through the output gear shaft hole 332e, and is axially limited by a circlip 343 clamped on the shaft 342.

The rest of the electric ground slide rail transmission system in this embodiment is the same as that of the electric ground slide rail transmission system in Embodiment 1.

### Embodiment 3

A difference between an electric ground slide rail transmission system in this embodiment and the electric ground slide rail transmission system in Embodiment 1 lies in that the transmission assembly is a transmission synchronization mechanism assembly 370.

Referring to FIG. 10, a transmission synchronization wheel box in the transmission ynchronization mechanism assembly 370 is a two-piece structure, that is, is composed of a first transmission synchronization wheel box 371 and a second transmission synchronization wheel box 372. The first transmission synchronization wheel box 371 and the second transmission synchronization wheel box 372 are connected by using a plurality of screws 373. Two mounting holes 371a and 371b and two mounting holes 372a and 372b are respectively provided on the first transmission synchronization wheel box 371 and the second transmission synchronization wheel box 372, and driving synchronization pulley shaft holes 371c and 372c and output gear shaft holes 371e and 372e are further respectively provided on the first transmission synchronization wheel box 371 and the second transmission synchronization wheel box 372. The driving synchronization pulley shaft holes 371c and 372c and the output gear shaft holes 371e and 372e respectively extend through the first transmission synchronization wheel box 371 and the second transmission synchronization wheel box 372.

In addition, two waist-shaped holes 371d and 372d and two waist-shaped holes 371f and 372f are respectively provided on the first transmission synchronization wheel box 371 and the second transmission synchronization wheel box 372. The waist-shaped holes 371d and 372d and 371f and 372f respectively extend through the first transmission synchronization wheel box 371 and the second transmission synchronization wheel box 372.

Two ends of a transmission coupling shaft 373a on a driving synchronization pulley 373 in the transmission synchronization wheel assembly 370 are axially disposed in the driving synchronization pulley shaft holes 371c and 372c respectively and placed between the first transmission synchronization wheel box 371 and the second transmission synchronization wheel box 372.

An output synchronization pulley 374 and the output gear 340 are coaxially integrated, and a shaft 341 between the output synchronization pulley 374 and the output gear 340 is disposed in the output gear shaft hole 372e. A shaft sleeve 375 is mounted in the output gear shaft hole 371e. A stud 376 is caused to pass through an inner hole of the shaft sleeve 375 and inner holes of the output synchronization pulley 374 and the output gear 340 in sequence, and is then locked by using a nut 377. In this way, the output synchronization pulley 374 and the output gear 340 can be axially disposed on the first transmission synchronization wheel box 371 and the second transmission synchronization wheel box 372. Together. In addition, the output synchronization pulley 374 is placed between the first transmission synchronization wheel box 371 and the second transmission synchronization wheel box 372, and the output gear 340 is placed outside the second transmission synchronization wheel box 372.

A synchronization belt 378 surrounds the driving synchronization pulley 373 and the output synchronization pulley 374.

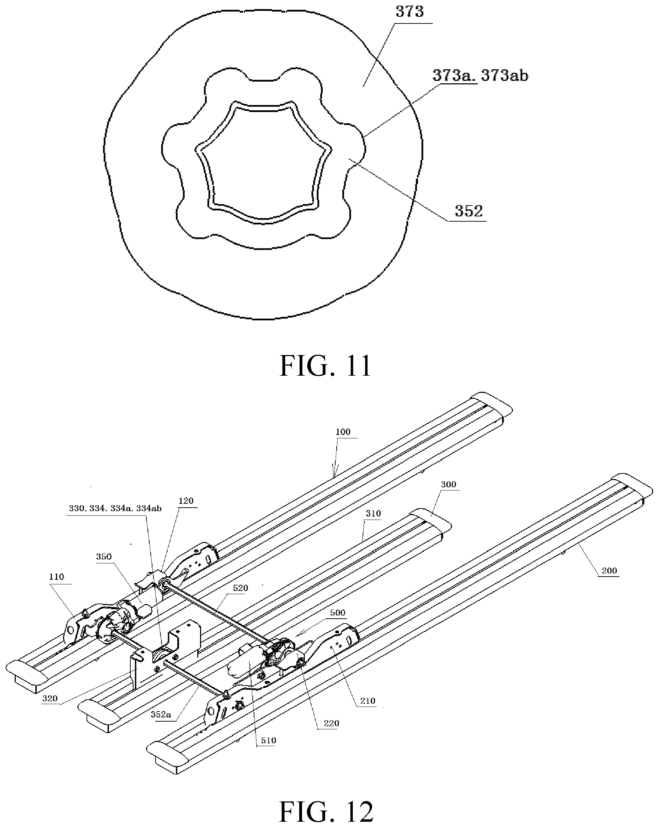

With reference to FIG. 11, the output shaft 352 of the driving motor 350 is inserted into an inner hole 373ab of a transmission coupling shaft 373a on the driving synchronization pulley 373 to be coupled with the driving synchronization pulley 373. An outer circumference of the output shaft 352 of the driving motor 350 and an inner circumference of the inner hole 373ab of the transmission coupling shaft 373a on the driving synchronization pulley 373 are in asymmetrical hexapetalous shapes matching each other, which can improve positioning accuracy and facilitate meshing of the driving gear, thereby avoiding slipping as a result of long-term operation.

The transmission synchronization mechanism assembly 370 further includes two synchronization belt tensioners 378a and 378b. Two ends of a synchronization belt tensioner shaft 378aa in the synchronization belt tensioner 378a respectively pass through the two waist-shaped holes 371d and 372d on the first transmission synchronization wheel box 371 and the second transmission synchronization wheel box 372 and are locked by using nuts. Two ends of a synchronization belt tensioner shaft 378ba in the synchronization belt tensioner 378b respectively pass through the two waist-shaped holes 371f and 372f on the first transmission synchronization wheel box 371 and the second transmission synchronization wheel box 372 and are locked by using nuts. The nuts may be loosened to adjust the positions of the synchronization belt tensioners 378a and 378b may be adjusted to tension the synchronization belt 378.

The rest of the electric ground slide rail transmission system in this embodiment is the same as that of the electric ground slide rail transmission system in Embodiment 1.

An operating process of this embodiment is as follows:
The output shaft 352 of the driving motor 350 drives the driving synchronization pulley 373 to rotate, the rotating driving synchronization pulley 373 drives, by using the synchronization belt 378, the output synchronization pulley 374 to rotate, the rotating output synchronization pulley 374 drives the output gear 340 to rotate, and the rotating output gear 340 is meshed with the rack 360 to drive the transmission box support 320 to linearly reciprocate on the driving rail 311 of the lower rail assembly 310. The transmission box support 320 that linearly moves drives, by using the slide rail connection frame assembly 400, the seat to be adjusted frontward and rearward along the left rail assembly 100 and the right rail assembly 200.

### Embodiment 4

A difference between an electric ground slide rail transmission system in this embodiment and the electric ground slide rail transmission system in Embodiment 1 and Embodiment 2 is as follows. Referring to FIG. 12, the driving motor 350 is mounted on the left slide rail support 110 in the left rail assembly 100. The output shaft of the driving motor 350 is a synchronization rod 352a. The synchronization rod 352a extends from two ends of the driving motor 350. The synchronization rod 352a passes through the inner hole 334ab of the transmission coupling shaft 334a in the driving gear 334 to be coupled with the driving gear 334. Left and right ends of the synchronization rod 352a are respectively axially disposed on the left slide rail support 110 in the left rail assembly 100 and on the right slide rail support 210 in the right rail assembly 200.

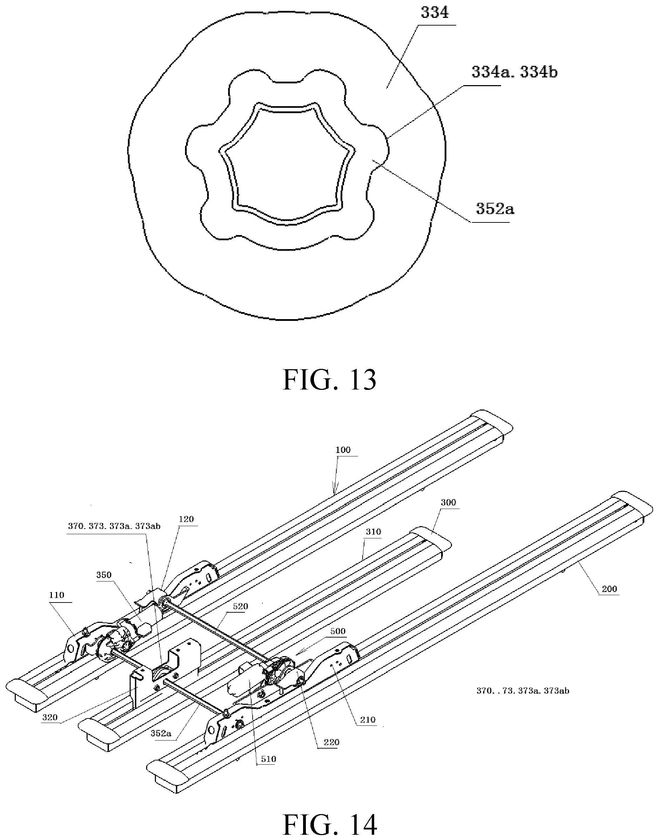

Referring to FIG. 13, an outer circumference of the synchronization rod 352a and an inner circumference of the inner hole 334ab of the transmission coupling shaft 334a in the driving gear 334 are in asymmetrical hexapetalous shapes matching each other, which can improve positioning accuracy and facilitate meshing of the driving gear, thereby avoiding slipping as a result of long-term operation.

A left locking mechanism 120 in the left rail assembly 100 and a right locking mechanism 220 in the right rail assembly 200 are unlocked by using a synchronization unlocking mechanism 500. The synchronization unlocking mechanism 500 includes a synchronization unlocking motor 510 and a synchronization unlocking rod 520 configured to be driven by the synchronization unlocking motor 510. A left end and a right end of the synchronization unlocking rod 520 are drivably connected to the left locking mechanism 120 and the right locking mechanism 220 respectively, and the synchronization unlocking motor 500 is mounted to the right slide rail support 210.

The rest of the electric ground slide rail transmission system in this embodiment is the same as those of the electric ground slide rail transmission systems in Embodiment 1 and Embodiment 2.

### Embodiment 5

A difference between an electric ground slide rail transmission system in this embodiment and the electric ground slide rail transmission system in Embodiment 3 is as follows. Referring to FIG. 14, the driving motor 350 is mounted on the left slide rail support 110 in the left rail assembly 100. The output shaft of the driving motor 350 is a synchronization rod 352a. The synchronization rod 352a extends from two ends of the driving motor 350. The synchronization rod 352a passes through the inner hole 373ab of the transmission coupling shaft 373a on the driving synchronization pulley 373 to be coupled with the driving synchronization pulley 373. Left and right ends of the synchronization rod 352a are respectively axially disposed on the left slide rail support 110 in the left rail assembly 100 and on the right slide rail support 210 in the right rail assembly 200.

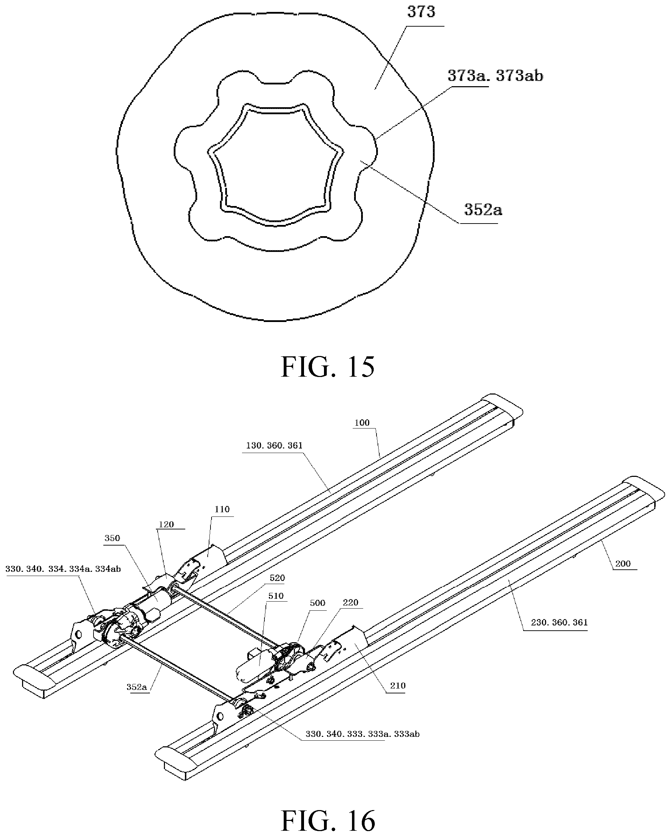

Referring to FIG. 15, an outer circumference of the synchronization rod 352a and an inner circumference of the inner hole 373ab of the transmission coupling shaft 373a in the driving synchronization pulley 373 are in asymmetrical hexapetalous shapes matching each other, which can improve positioning accuracy and facilitate meshing of the driving gear, thereby avoiding slipping as a result of long-term operation.

A left locking mechanism 120 in the left rail assembly 100 and a right locking mechanism 220 in the right rail assembly 200 are unlocked by using a synchronization unlocking mechanism 500. The synchronization unlocking mechanism 500 includes a synchronization unlocking motor 510 and a synchronization unlocking rod 520 configured to be driven by the synchronization unlocking motor 510. A left end and a right end of the synchronization unlocking rod 520 are drivably connected to the left locking mechanism 120 and the right locking mechanism 220 respectively, and the synchronization unlocking motor 500 is mounted to the right slide rail support 210.

The rest of the electric ground slide rail transmission system in this embodiment is the same as that of the electric ground slide rail transmission system in Embodiment 3.

### Embodiment 6

An electric ground slide rail transmission system in this embodiment includes a left rail assembly 100 and a right rail assembly 200. The left rail assembly 100 and the right rail assembly 200 are configured to provide a support function and a locking function of a slide rail. A left slide rail support 110 and a right slide rail support 210 in the left rail assembly 100 and the right rail assembly 200 are directly connected to a seat.

Referring to FIG. 16, the electric ground slide rail transmission system in this embodiment further includes two transmission gear assemblies 330 and two output gears 340 respectively disposed on the left slide rail support 110 and the right slide rail support 210 and a driving motor 350. The driving motor 350 is mounted on the left slide rail support 110 in the left rail assembly 100.

The structures of the two transmission gear assemblies 330 are the same as those of the transmission gear assembly 330 in Embodiment 1 or Embodiment 2.

An output shaft of the driving motor 350 is a synchronization rod 352a. The synchronization rod 352a extends from two ends of the driving motor 350. Left and right ends of the synchronization rod 352a respectively pass through inner holes 334ab of transmission coupling shafts 334a in driving gears 334 in the two transmission gear assemblies 330, and are then axially disposed on the left slide rail support 110 in the left rail assembly 100 and on the right slide rail support 210 in the right rail assembly 200 respectively.

A left locking mechanism 120 in the left rail assembly 100 and a right locking mechanism 220 in the right rail assembly 200 are unlocked by using a synchronization unlocking mechanism 500. The synchronization unlocking mechanism 500 includes a synchronization unlocking motor 510 and a synchronization unlocking rod 520 configured to be driven by the synchronization unlocking motor 510. A left end and a right end of the synchronization unlocking rod 520 are drivably connected to the left locking mechanism 120 and the right locking mechanism 220 respectively, and the synchronization unlocking motor 500 is mounted to the right slide rail support 210.

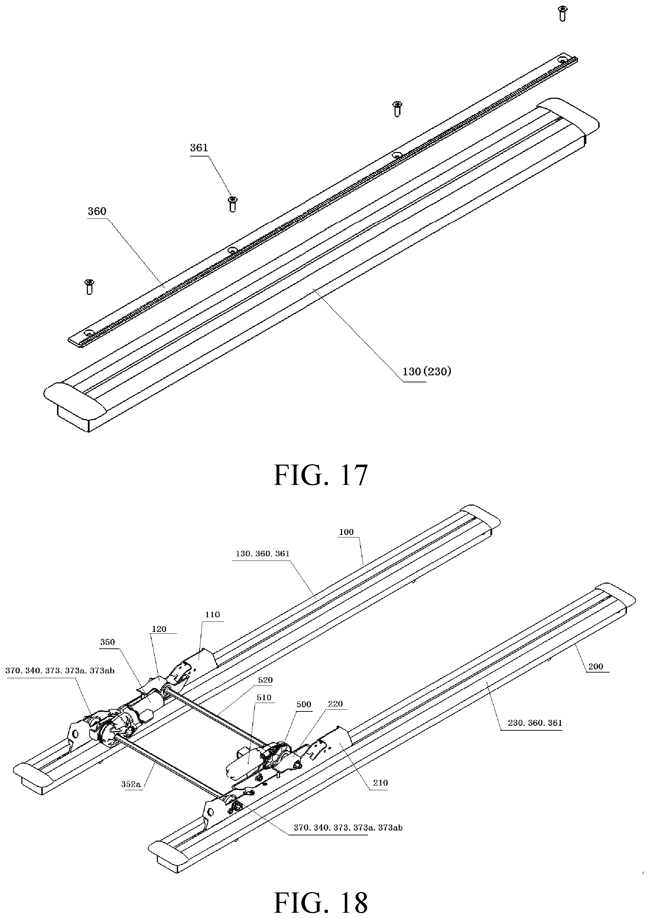

Referring to FIG. 17, two racks 360 are respectively fixed in a left rail 130 and a right rail 230 in the left rail assembly 100 and the right rail assembly 200 by using a plurality of screws 361.

A left locking mechanism 120 in the left rail assembly 100 and a right locking mechanism 220 in the right rail assembly 200 are unlocked by using a synchronization unlocking mechanism 500. The synchronization unlocking mechanism 500 includes a synchronization unlocking motor 510 and a synchronization unlocking rod 520 configured to be driven by the synchronization unlocking motor 510. A left end and a right end of the synchronization unlocking rod 520 are drivably connected to the left locking mechanism 120 and the right locking mechanism 220 respectively, and the synchronization unlocking motor 500 is mounted to the right slide rail support 210.

An operating principle of this embodiment is the same as that of Embodiment 1 or Embodiment 2.

### Embodiment 7

Referring to FIG. 18, an electric ground slide rail transmission system in this embodiment further includes two transmission synchronization wheel assemblies 370 and two output gears 340 respectively disposed on the left slide rail support 110 and the right slide rail support 210 and a driving motor 350. The driving motor 350 is mounted on the left slide rail support 110 in the left rail assembly 100.

The structures of the two transmission synchronization wheel assemblies 370 are the same as those of the transmission synchronization wheel assembly 370 in Embodiment 3.

An output shaft of the driving motor 350 is a synchronization rod 352a. The synchronization rod 352a extends from two ends of the driving motor 350. Left and right ends of the synchronization rod 352a respectively pass through inner holes 373ab of transmission coupling shafts 373a in driving synchronization pulleys 373 in the two transmission synchronization wheel assemblies 370, and are then axially disposed on the left slide rail support 110 in the left rail assembly 100 and on the right slide rail support 210 in the right rail assembly 200 respectively.

A left locking mechanism 120 in the left rail assembly 100 and a right locking mechanism 220 in the right rail assembly 200 are unlocked by using a synchronization unlocking mechanism 500. The synchronization unlocking mechanism 500 includes a synchronization unlocking motor 510 and a synchronization unlocking rod 520 configured to be driven by the synchronization unlocking motor 510. A left end and a right end of the synchronization unlocking rod 520 are drivably connected to the left locking mechanism 120 and the right locking mechanism 220 respectively, and the synchronization unlocking motor 500 is mounted to the right slide rail support 210.

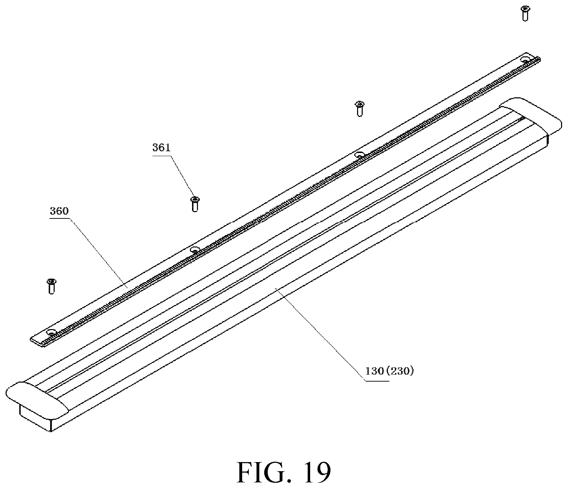

Referring to FIG. 19, two racks 360 are respectively fixed in a left rail 130 and a right rail 230 in the left rail assembly 100 and the right rail assembly 200 by using a plurality of screws 361.

A left locking mechanism 120 in the left rail assembly 100 and a right locking mechanism 220 in the right rail assembly 200 are unlocked by using a synchronization unlocking mechanism 500. The synchronization unlocking mechanism 500 includes a synchronization unlocking motor 510 and a synchronization unlocking rod 520 configured to be driven by the synchronization unlocking motor 510. A left end and a right end of the synchronization unlocking rod 520 are drivably connected to the left locking mechanism 120 and the right locking mechanism 220 respectively, and the synchronization unlocking motor 500 is mounted to the right slide rail support 210.

An operating principle of Embodiment 1 is the same as that of Embodiment 3.

## Claims

1. An electric ground slide rail transmission system, comprising a left rail assembly, a right rail assembly, a driving rail assembly, and a slide rail connection frame assembly, the left rail assembly and the right rail assembly being configured to provide a support function and a locking function of a slide rail, the driving rail assembly being placed between the left rail assembly and the right rail assembly to provide an electric transmission function of the slide rail, the slide rail connection frame assembly being configured to connect the left rail assembly, the right rail assembly, and the driving rail assembly into a whole and being connected to a seat, to form an electric ground slide rail transmission system, wherein the driving rail assembly comprises a lower rail assembly, a transmission box support slidably disposed on the lower rail assembly, a transmission assembly mounted in the transmission box support, an output gear configured to be driven by the transmission assembly, and a driving motor mounted to the transmission box support, wherein the driving motor is configured to drive the transmission assembly to operate, the transmission assembly is configured to drive the output gear to rotate, the output gear is meshed with a rack disposed in the lower rail assembly to drive the transmission box support to linearly reciprocate on the lower rail assembly, and the transmission box support that linearly moves drives, by using the slide rail connection frame assembly, the seat to be adjusted frontward and rearward along the left rail assembly and the right rail assembly.

2. An electric ground slide rail transmission system, comprising a left rail assembly and a right rail assembly, the left rail assembly and the right rail assembly being configured to provide a support function and a locking function of a slide rail, and a left slide rail support on the left rail assembly and a right slide rail support on the right rail assembly being directly connected to a seat, wherein the system further comprises two transmission assemblies and two output gears respectively disposed on the left slide rail support and the right slide rail support and a driving motor, wherein the driving motor is configured to synchronously drive the two transmission assemblies to operate, the two transmission assemblies are configured to synchronously drive the two output gears to rotate, the two output gears are respectively meshed with racks respectively disposed in the left rail assembly and the right rail assembly to drive the left slide rail support and the right slide rail support to linearly reciprocate on the left rail assembly and the right rail assembly respectively, and the left slide rail support and the right slide rail support that linearly move drive the seat to be adjusted frontward and rearward along the left rail assembly and the right rail assembly.

3. The electric ground slide rail transmission system according to claim 2, wherein the driving motor is mounted to the left slide rail support or the right slide rail support.

4. The electric ground slide rail transmission system according to claim 1 or 2, wherein the transmission assembly is a transmission gear assembly comprising a transmission gear box and a driving gear axially disposed in the transmission gear box, the output gears are also axially disposed on the transmission gear box, the driving motor drives the driving gear to rotate, the driving gear drives the output gear to rotate, and the transmission gear box is mounted to the transmission box support or the left slide rail support and the right slide rail support.

5. The electric ground slide rail transmission system according to claim 4, wherein an output shaft of the driving motor is inserted into a transmission coupling shaft hole in the driving gear to be coupled with the driving gear.

6. The electric ground slide rail transmission system according to claim 5, wherein an outer circumference of the output shaft of the driving motor and an inner circumference of the transmission coupling shaft hole in the driving gear are in asymmetrical hexapetalous shapes matching each other.

7. The electric ground slide rail transmission system according to claim 4, wherein an output shaft of the driving motor is a synchronization rod extending from two ends of the driving motor, inserted into transmission coupling shaft holes of the driving gears in the two transmission gear assemblies, and coupled with the driving gears in the two transmission gear assemblies, wherein two ends of the synchronization rod are axially disposed on the left slide rail support and the right slide rail support respectively.

8. The electric ground slide rail transmission system according to claim 7, wherein an outer circumference of the synchronization rod and an inner circumference of the transmission coupling shaft hole in the driving gear are in asymmetrical hexapetalous shapes matching each other.

9. The electric ground slide rail transmission system according to claim 4, wherein the transmission gear assembly further comprises a transmission gear axially disposed in the transmission gear box, the transmission gear is meshed with the driving gear and the output gear, and the driving gear drives, by using the transmission gear, the output gear to rotate.

10. The electric ground slide rail transmission system according to claim 4, wherein the transmission gear assembly further comprises a first-stage transmission gear and a second-stage transmission gear, the first-stage transmission gear is axially disposed in the transmission gear box, the second-stage transmission gear is coaxially and fixedly connected to the output gear, the first-stage transmission gear is meshed with the driving gear and the second-stage transmission gear, and the driving gear drives, by using the first-stage transmission gear and the second-stage transmission gear, the output gear to rotate.

11. The electric ground slide rail transmission system according to claim 10, wherein the second-stage transmission gear is coaxially and fixedly connected to the output gear by using a stud extending through the second-stage transmission gear and the output gear.

12. The electric ground slide rail transmission system according to claim 10, wherein the second-stage transmission gear and the output gear are coaxially integrally formed.

13. The electric ground slide rail transmission system according to claim 1 or 2, wherein the transmission assembly is a transmission synchronization mechanism assembly comprising a transmission synchronization wheel box, a driving synchronization pulley axially disposed in the transmission synchronization wheel box, an output synchronization pulley coaxially and fixedly connected to the output gears, and a synchronization belt surrounding the driving synchronization pulley and the output synchronization pulley, the output gear is also axially disposed on the transmission synchronization wheel box, the driving motor drives the driving synchronization pulley to rotate, the driving synchronization pulley drives, by using the synchronization belt, the output synchronization pulley to rotate, the output synchronization pulley drives the output gear to rotate, and the transmission synchronization wheel box is mounted to the transmission box support or the left slide rail support and the right slide rail support.

14. The electric ground slide rail transmission system according to claim 13, wherein an output shaft of the driving motor is inserted into a transmission coupling shaft hole in the driving synchronization pulley to be coupled with the driving synchronization pulley.

15. The electric ground slide rail transmission system according to claim 14, wherein an outer circumference of the output shaft of the driving motor and an inner circumference of the transmission coupling shaft hole in the driving synchronization pulley are in asymmetrical hexapetalous shapes matching each other.

16. The electric ground slide rail transmission system according to claim 13, wherein an output shaft of the driving motor is a synchronization rod extending from two ends of the driving motor, inserted into a transmission coupling shaft hole of the driving synchronization pulley in a transmission synchronization wheel assembly, and coupled with the driving synchronization pulley in a transmission synchronization wheel assembly wherein two ends of the synchronization rod are axially disposed on the left slide rail support and the right slide rail support respectively.

17. The electric ground slide rail transmission system according to claim 16, wherein an outer circumference of the synchronization rod and an inner circumference of the transmission coupling shaft hole in the driving synchronization pulley are in asymmetrical hexapetalous shapes matching each other.

18. The electric ground slide rail transmission system according to claim 13, wherein the transmission synchronization mechanism assembly further comprises at least one synchronization belt tensioner axially disposed on the transmission synchronization wheel box to tension the synchronization belt.

19. The electric ground slide rail transmission system according to claim 18, wherein a waist-shaped hole is provided at a proper position on the transmission synchronization wheel box, and the synchronization belt tensioner is axially disposed in the waist-shaped hole and is movable and lockable in the waist-shaped hole.

20. The electric ground slide rail transmission system according to claim 1 or 2, wherein a left locking mechanism in the left rail assembly and a right locking mechanism in the right rail assembly are unlocked by using a synchronization unlocking mechanism, the synchronization unlocking mechanism comprises a synchronization unlocking motor and a synchronization unlocking rod configured to be driven by the synchronization unlocking motor, a left end and a right end of the synchronization unlocking rod are drivably connected to the left locking mechanism and the right locking mechanism respectively, and the synchronization unlocking motor is mounted to the transmission box support or the left slide rail support or the right slide rail support.
